# FASCICULE DE BREVET EUROPEEN

(11) **EP 2 161 198 B1**
(45) Date de publication et mention de la délivrance du brevet: **19.02.2014**
(21) Numéro de dépôt: 09168706.1
(22) Date de dépôt: 26.08.2009
(51) Int. Cl.: B64G 1/00, B64G 1/40

(54) **Fagot comportant deux paires de réservoirs et lanceur aéroporté comportant un tel fagot**
Bündel aus zwei Behälterpaaren und auf dem Luftweg transportierte Trägerrakete, die ein solches Bündel umfasst
Fagot comprising two pairs of tanks and airborne launcher comprising such a fagot

(30) Priorité: 08.09.2008 FR 0856002
(43) Date de publication de la demande: 10.03.2010
(73) Titulaire: SNECMA, 75015 Paris (FR)
(72) Inventeur: Peyrisse, Daniel, 27950 Saint Marcel (FR); Le Louedec, Dominique, 27950 Saint Marcel (FR); Conrardy, Jean-Marie, 27940 Courcelles sur Seine (FR)
(74) Mandataire: Delumeau, François Guy

(56) Documents cités:
- WO-A-88/02332
- RU-C1- 2 059 858
- US-A- 3 180 084
- US-A- 5 533 331

## Description

### Arrière-plan de l'invention

L'invention concerne un fagot de réservoirs et un lanceur aéroporté comportant un tel fagot. Un tel lanceur est connu de WO 88/02332, qui est considéré comme l'art antérieur le plus proche et décrit les caractéristiques de la préambule de la revendication 1.

Dans l'état actuel de la technique, les lanceurs aéroportés utilisent des réservoirs de section circulaire alignés les uns derrière les autres le long de l'axe du lanceur.

Cette disposition impose un certain nombre de contraintes d'encombrement pour l'avion porteur, notamment en ce qui concerne les systèmes d'accrochage et de largage du lanceur et la position des trains d'atterrissage.

### Objet et résumé de l'invention

La présente invention pallie aux inconvénients précités en proposant un fagot comportant deux paires de réservoirs cylindriques de même volume, chaque paire comportant deux réservoirs contenant un ergol de même densité s'écoulant avec le même débit volumétrique, ces quatre réservoirs étant fixés directement entre eux via des anneaux de renfort de sorte que le centre de gravité de chacune des paires reste en permanence sur l'axe du fagot pendant l'écoulement des ergols.

Dans un mode particulier de réalisation, les anneaux de renfort font partie intégrante des réservoirs.

Les concepts de réservoirs en fagot n'ont jamais été utilisés dans le contexte des lanceurs aéroportés.

L'homme du métier comprendra que le moteur alimenté par ces réservoirs est réglé de sorte que les quatre réservoirs se vident en même temps, si bien que le centre de gravité de l'étage reste en permanence sur l'axe du fagot.

A titre d'exemple non limitatif, une paire de réservoirs peut comporter un peroxyde d'azote (formule chimique N₂O₄) et l'autre paire de réservoirs, du monométhyle hydrazine (MMH).

Lorsque ce fagot est utilisé dans un lanceur aéroporté, il permet avantageusement de réduire considérablement la longueur de ce lanceur, du fait que les réservoirs ne sont pas alignés les uns avec les autres.

En pratique, le rapport entre la longueur et la largeur de l'étage dans lequel se trouve le fagot selon l'invention (étage supérieur) est équivalent à celui d'un étage classique dans lequel les réservoirs sont alignés, à masse égale.

De façon avantageuse, l'augmentation du maître-couple par la mise en oeuvre de l'invention est de peu d'importance du fait de la taille de la coiffe du lanceur.

Dans un mode particulier de réalisation de l'invention, la section de l'étage supérieur est carrée, à angles arrondis.

Cette caractéristique permet avantageusement de maîtriser le maître-couple.

Par ailleurs, dans un mode particulier de réalisation de l'invention, certains des anneaux de renfort comportent des moyens de fixation pour un moteur ou pour une charge utile.

Autrement dit et de façon très avantageuse, les réservoirs forment eux-mêmes la structure du lanceur.

Ainsi, les efforts mécaniques, notamment au moment de la poussée, sont supportés par les réservoirs et leurs moyens de fixation propres. Grâce à l'invention, il n'est donc pas nécessaire d'utiliser un cône de poussée, comme d'usage dans les structures classiques de lanceurs, ce qui permet une économie de masse très avantageuse.

Selon un deuxième aspect, l'invention concerne un lanceur aéroporté comportant un fagot de réservoirs tel que mentionné ci-dessus et des moyens de fixation solidaires de deux réservoirs de ce fagot, permettant de fixer directement une aile du lanceur.

Conformément à cet aspect de l'invention, l'aile du lanceur peut être directement fixée sur le fagot de réservoirs, par exemple par l'intermédiaire de ferrures solidaires de ces réservoirs.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente en perspective un lanceur aéroporté conforme à l'invention dans un mode particulier de réalisation ;
- la figure 2 est une vue en perspective partiellement arrachée du lanceur aéroporté de la figure 1 ;
- la figure 3 représente une coupe longitudinale du lanceur aéroporté de la figure 1, avec deux détails grossis permettant de visualiser la fixation d'une charge utile et du moteur sur le fagot de ce lanceur ;
- la figure 4 représente une coupe IV/IV transversale de la figure 3 ; et
- la figure 5 représente un détail grossi de la figure 3.

### Description détaillée d'un mode détaillé de réalisation

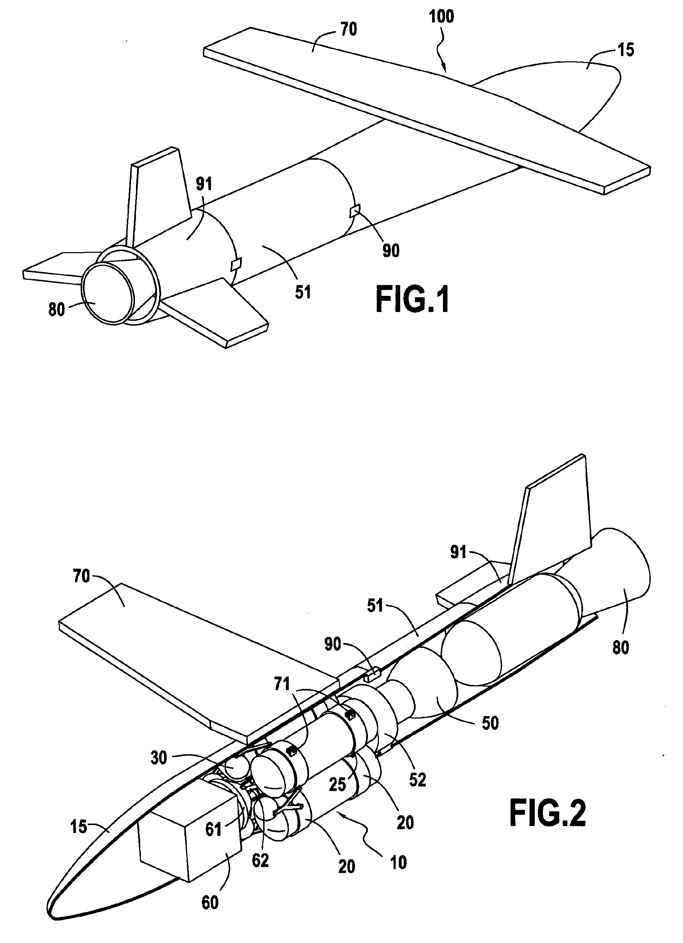

A la **figure 1** on a représenté une vue en perspective très générale d'un lanceur aéroporté 100 conforme à l'invention dans un mode de réalisation.

Sur cette figure, on a référencé 15 une coiffe de forme ogivale adaptée à assurer la protection d'une charge utile, non représentée sur cette figure, tout en conférant au lanceur 100 l'aérodynamique requise.

Derrière la coiffe, se trouve une jupe inter-étage 51, elle-même suivie d'un étage à poudre 91, dans lequel se trouve un bloc de poudre référencé 80.

Sur cette figure, on a référencé 90 les fixations inter-étages.

Le fagot conforme à l'invention est situé dans un étage supérieur recouvert par la coiffe 15 et la jupe inter-étages 51.

Dans le mode de réalisation de la figure 1, le lanceur aéroporté 100 conforme à l'invention comporte une aile 70 et une pluralité d'empennages sur sa partie arrière.

A la **figure 2**, on a représenté une vue partiellement arrachée montrant la structure générale interne de ce lanceur.

Sous la coiffe 15, on trouve une charge utile 60, par exemple un satellite.

La référence 10 représente dans son ensemble un fagot de quatre réservoirs fixés directement entre eux via des anneaux de renfort 20.

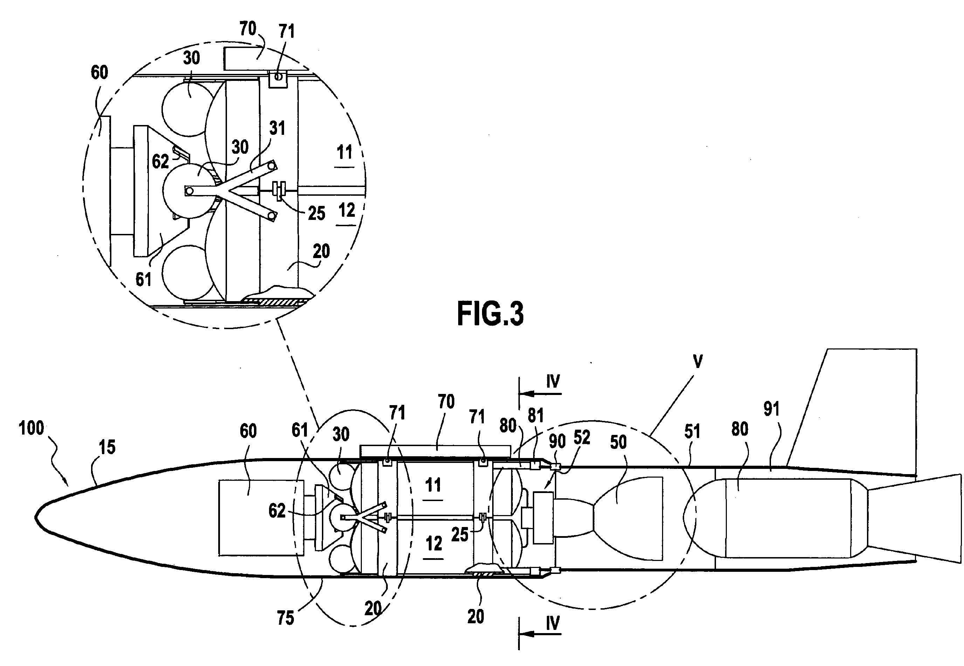

Les anneaux de renfort 20 font partie intégrante des réservoirs comme le montrent les détails de la figure 3.

Comme il apparaît sur la figure 2, l'axe de ce fagot se confond avec l'axe du lanceur aéroporté.

Conformément à l'invention, la charge utile 60 est fixée directement sur le fagot, de même que le moteur 50.

Conformément à l'invention, l'aile 70 est fixée directement sur le fagot 10.

Dans l'exemple décrit ici, le lanceur aéroporté 100 comporte quatre sphères haute pression d'hélium, référencées 30, pour la poussée des ergols.

La **figure 3** représente une coupe longitudinale du lanceur représenté à la figure 2, avec deux détails grossis pour illustrer d'une part, la fixation de la charge utile 60 et des sphères d'hélium 30 au fagot 10 et, d'autre part, la fixation du moteur 50 au fagot 10.

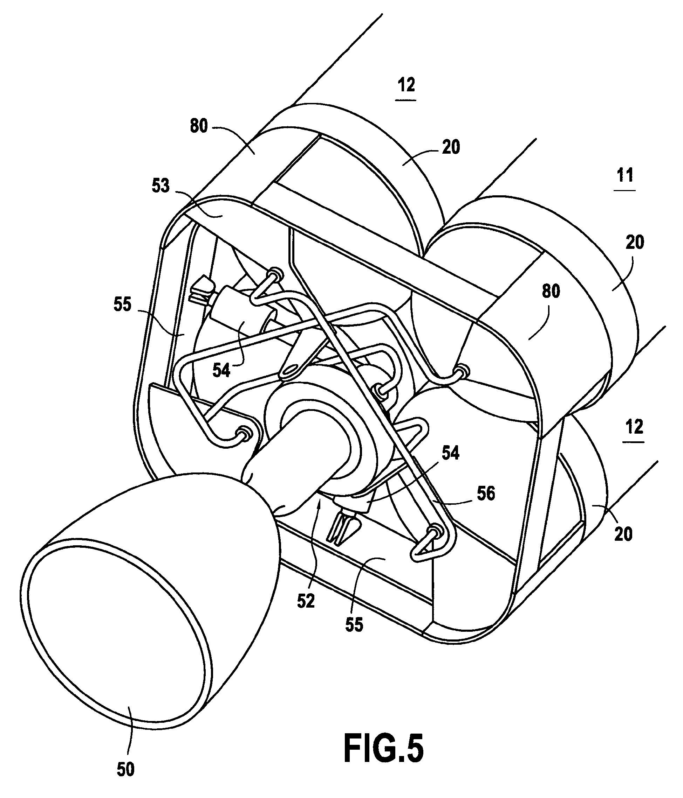

Dans l'exemple de réalisation décrit ici, la jupe 51 présente une bifurcation sensiblement en forme de fourche pour former :
- un anneau extérieur lié avec la coiffe 15 par une attache 90 pouvant être cisaillée par un premier cordon pyrotechnique explosif pour libérer la coiffe 15 ; et
- un anneau intérieur lié aux anneaux de renfort 20 par une patte de liaison 80 représentée en détails à la figure 5, celle-ci pouvant être cisaillée par un deuxième cordon pyrotechnique 81 pour libérer la jupe inter-étages 51.

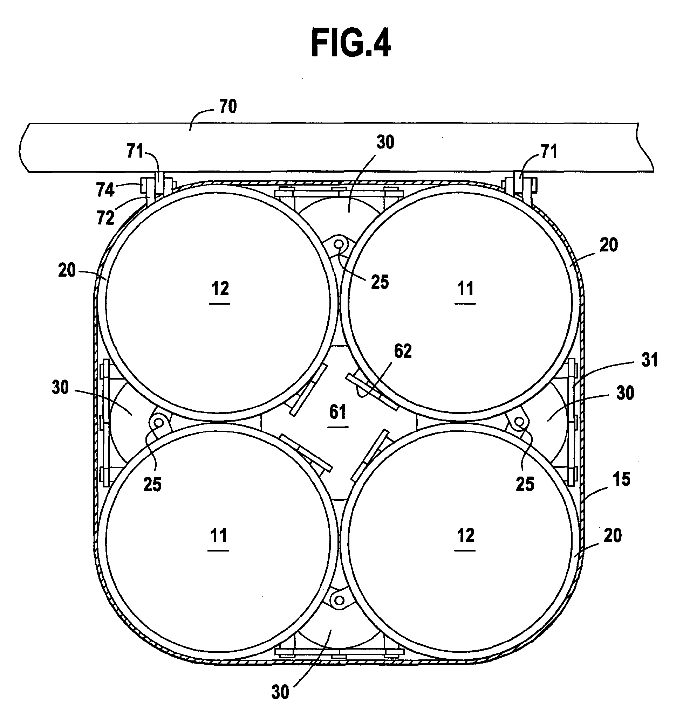

La **figure 4** est une coupe IV/IV de la vue de la figure 3. Elle illustre que, dans ce mode de réalisation, l'enveloppe de l'étage supérieur 75 est de section sensiblement carrée, avec des angles arrondis, cette forme permettant de minimiser le couple au maximum.

Le fagot 10 décrit ici comporte une paire de premiers réservoirs référencée 11 et une paire de deuxièmes réservoirs référencée 12.

Chaque paire de réservoirs comporte un même ergol et s'écoule avec le même débit volumétrique.

Les réservoirs sont fixés directement entre eux via les anneaux de renfort 20 au moyen de ferrures référencées 25.

Ces ferrures 25 sont agencées de manière à réduire au maximum la distance séparant deux réservoirs.

Les sphères d'hélium 30 sont fixées sur les anneaux de renfort 20 par des biellettes 31.

Dans l'exemple décrit ici, la charge utile 60 est fixée sur une platine support 61 elle-même liée aux réservoirs 11, 12 au moyen de secteurs de viroles 62 soudés aux anneaux de renfort 20, comme représenté à la figure 4.

Conformément à l'invention, les moyens 52 d'injection du lanceur aéroporté 100 sont adaptés à contrôler l'alimentation du moteur 50, de sorte que les quatre réservoirs 11, 12 se vident en même temps.

Dans l'exemple de réalisation décrit ici, le moteur 50 est orientable, ceci pour modifier la direction de la poussée.

A cet effet, le moteur 50 est monté sur un cardan 52 lié aux anneaux de renfort 20 par une platine support 53, l'orientation du moteur pouvant être ajustée avec des vérins de pilotage 54.

Dans le mode de réalisation décrit ici, les supports des vérins 54 sont fixés aux anneaux de renfort 20 par des ferrures 55.

Dans le mode de réalisation décrit ici, une aile 70 est fixée directement sur des réservoirs 11, 12 du lanceur aéroporté par des moyens de fixation 71 solidaires de ces réservoirs.

Dans l'exemple décrit ici, l'aile 70 comporte plus précisément des oeilletons 71 liés à des montures ou chapes 72 soudées sur les anneaux de renfort 20 par des pions de cisaillement explosifs 74 permettant la séparation de l'aile 70.

## Revendications

1. Fagot (10) comportant deux paires de réservoirs ((11, 11), (12, 12)) cylindriques de même volume, chaque paire comportant deux réservoirs contenant un ergol de même densité s'écoulant avec le même débit volumétrique, **caractérisé en ce que** lesdits quatre réservoirs sont fixés directement entre eux via des anneaux de renfort (20) de sorte que le centre de gravité de chacune desdites paires reste en permanence sur l'axe dudit fagot (10) pendant l'écoulement desdits ergols.

2. Fagot (10) selon la revendication 1, **caractérisé en ce que** lesdits anneaux de renfort (20) font partie intégrante desdits réservoirs (11, 12).

3. Fagot selon la revendication 1 ou 2, **caractérisé en ce qu'**au moins certains desdits anneaux de renforts (20) comportent des moyens de fixation (25, 73) pour un moteur (50) et pour une charge utile (60).

4. Lanceur aéroporté (100), **caractérisé en ce qu'**il comporte un fagot (10) de réservoirs selon l'une quelconque des revendications 1 à 3, et **en ce qu'**il comporte des moyens de fixation (71) solidaires de deux (11, 12) desdits réservoirs permettant de fixer directement une aile (70) dudit lanceur (100).

5. Lanceur aéroporté (100) selon la revendication 4, **caractérisé en ce que** la section de l'étage supérieur (75) dans lequel se trouve ledit fagot (10) est de section carrée, les angles étant arrondis.

## Patentansprüche

1. Bündel (10), umfassend zwei Paare von zylindrischen Behältern ((11, 11), (12, 12)) mit gleicher Füllmenge, wobei jedes Paar zwei Behälter umfasst, die einen Treibstoff mit gleicher Dichte, der mit dem gleichen Volumenstrom strömt, enthalten, **dadurch gekennzeichnet, dass** die vier Behälter über Verstärkungsringe (20) direkt untereinander befestigt sind, so dass der Schwerpunkt eines jeden der Paare während des Strömens der Treibstoffe ständig auf der Achse des Bündels (10) bleibt.

2. Bündel (10) nach Anspruch 1, **dadurch gekennzeichnet, dass** die Verstärkungsringe (20) einen festen Bestandteil der Behälter (11,12) bilden.

3. Bündel nach Anspruch 1 oder 2, **dadurch gekennzeichnet, dass** wenigstens einige der Verstärkungsringe (20) Befestigungsmittel (25, 73) für ein Triebwerk (50) und für eine Nutzlast (60) umfassen.

4. Luftgestützte Trägerrakete (100), **dadurch gekennzeichnet, dass** sie ein Behälterbündel (10) nach einem der Ansprüche 1 bis 3 umfasst und dass sie mit zwei (11, 12) der Behälter fest verbundene Befestigungsmittel (71) umfasst, die ermöglichen, einen Flügel (70) der Trägerrakete (100) direkt zu befestigen.

5. Luftgestützte Trägerrakete (100) nach Anspruch 4, **dadurch gekennzeichnet, dass** der Querschnitt der oberen Stufe (75), in der sich das Bündel (10) befindet, quadratisch ist, wobei die Ecken abgerundet sind.

## Claims

1. A bundle (10) comprising two pairs of same-volume cylindrical tanks ((11, 11), (12, 12)), each pair comprising two tanks containing a same-density propellant suitable for flowing at the same volume flow rate, **characterized in that** said four tanks are fastened directly to one another via reinforcing hoops (20) in such a manner that the center of gravity of each of said pairs remains continuously on the axis of said bundle (10) while said propellants are flowing.

2. A bundle (10) according to claim 1, wherein said reinforcing hoops (20) form integral portions of said tanks (11, 12).

3. A bundle according to claim 1 or 2, **characterized in that** at least some of said reinforcing hoops (20) include fastener means (25, 73) for an engine (50) and for a payload (60).

4. An airborne launcher (100), **characterized in that** it includes a bundle (10) of tanks according to any one of claims 1 to 3, and wherein it includes fastener means (71) secured to two (11, 12) of said tanks enabling a wing (70) of said launcher (100) to be fastened directly thereto.

5. An airborne launcher (100) according to claim 4, **characterized in that** the section of the top stage (75) in which said bundle (10) is to be found is square with corners that are rounded.
